(19)

**Europäisches Patentamt**
**European Patent Office**
**Office européen des brevets**

(11) **EP 2 745 151 B1**

(12) **EUROPEAN PATENT SPECIFICATION**

(45) Date of publication and mention
of the grant of the patent:
**01.04.2020 Bulletin 2020/14**

(21) Application number: **12882327.5**

(22) Date of filing: **02.08.2012**

(51) Int Cl.:
***G02B 6/028*** (2006.01)

(86) International application number:
**PCT/US2012/049289**

(87) International publication number:
**WO 2014/021894 (06.02.2014 Gazette 2014/06)**

(54) **FEW MODE OPTICAL FIBERS FOR MODE DIVISION MULTIPLEXING**

MEHRMODALE OPTISCHE FASERN FÜR MULTIPLEXING DURCH MODUSTEILUNG

FIBRES OPTIQUES À PEU DE MODES POUR MULTIPLEXAGE PAR RÉPARTITION DE MODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.08.2011 US 201161523552 P**

(43) Date of publication of application:
**25.06.2014 Bulletin 2014/26**

(73) Proprietor: **Corning Incorporated**
**Corning, New York 14831 (US)**

(72) Inventors:
• **BICKHAM, Scott, Robertson**
**Corning, NY 14830 (US)**
• **LI, Ming-Jun**
**Horseheads, NY 14845 (US)**
• **NOLAN, Daniel, Aloysius**
**Corning, NY 14830 (US)**
• **WANG, Ji**
**Painted Post, NY 14870 (US)**

(74) Representative: **Elkington and Fife LLP**
**Prospect House**
**8 Pembroke Road**
**Sevenoaks, Kent TN13 1XR (GB)**

(56) References cited:
EP-A1- 2 057 493        EP-A2- 1 712 936
WO-A1-2005/111683       WO-A2-2011/094400
US-A1- 2002 164 140     US-A1- 2006 103 919
US-A1- 2007 196 061     US-A1- 2008 226 246
US-A1- 2009 148 113     US-A1- 2010 329 671
US-A1- 2011 058 781     US-B1- 7 865 050
US-B1- 7 865 050        US-B2- 6 614 961
US-B2- 6 798 962        US-B2- 6 810 185

• RYF R ET AL: "Space-division multiplexing over 10 km of three-mode fiber using coherent 6 * 6 MIMO processing", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946745, ISBN: 978-1-4577-0213-6
• KATO Y ET AL: "Design Consideration on Broad-Band W-Type Two-Mode Optical Fibers", IEEE TRANSACTIONS ON MICROWAVE THEORY AND TECHNIQUES, IEEE SERVICE CENTER, PISCATAWAY, NJ, US, vol. 30, no. 1, 1 January 1982 (1982-01-01), pages 1-5, XP011243740, ISSN: 0018-9480

## Description

### FIELD

The present specification generally relates to optical fibers and more specifically to few mode optical fibers used for mode division multiplexing (MDM).

### BACKGROUND

The explosive growth in the volume and variety of multi-media telecommunication applications continues to drive speed demands for internet traffic and motivate research in backbone fiber-optic communication links. Coherent communications and electronic digital signal processing (DSP)-based receivers have been accepted in recent years as the next-generation standards for long-haul systems due to their flexibility, scalability and ability to compensate for various transmission impairments, including fiber nonlinearity. As fiber nonlinearity places a limit on achievable spectral efficiency, large effective-area ($A_{eff}$) single-mode fibers (SMFs) have been designed for reducing nonlinearity penalties.

However, the spectral efficiency of an optical fiber increases slowly with increasing effective area, so another solution is needed to increase system capacity. Recent experiments have demonstrated that it is possible to transmit signals in more than one spatial propagation mode of a few mode fiber (FMF) using multiple-input multiple-output (MIMO) techniques. Few mode fibers are particularly attractive for this application because the computational complexity directly scales with number of modes, and utilizing only a few modes reduces the risk of modal mixing that can lead to bit error rate penalties from multipath interference (MPI).

Few mode optical fibers previously proposed for optical fiber communications systems have either step index or parabolic cores in which the core diameter is increased relative to single mode fiber to support at least the LP11 mode in addition to the fundamental LP01 mode. With both of these core designs, there are large delay differences between the fundamental LP01 mode and the LP11 mode at one or more wavelengths in the 1550 nm window. These large delay differences make it difficult to demultiplex the optical signals in the time domain using MIMO.

Accordingly, a need exists for alternative designs for few mode optical fibers with low loss and small differential group delays (DGD).

WO2005/111683 teaches an optical waveguide fiber having a multi-segmented core. A set of fiber profiles is taught by US2002/0164140 to deliver only three well guided modes in each band. A three mode fiber is also taught by Ryf et al, "Space-division multiplexing over 10km of three-mode fiber using coherent 6x6 MIMO processing.

### SUMMARY

An aspect of the disclosure is a few mode optical fiber acccording to claim 1.

Another embodiment teaches a few mode optical fiber that includes a glass core and glass cladding surrounding the glass core. The glass core has a radius $R_1$ from about 8 $\mu$m to about 14 $\mu$m, a graded refractive index profile with an alpha value greater than or equal to about 1.9 and less than about 2.7 at a wavelength of 1550 nm, a maximum relative refractive index $\Delta_{1MAX}$ from about 0.3% to about 0.6% relative to a glass cladding, and an effective area at 1550 nm greater than about 90 $\mu$m$^2$ and less than about 160 $\mu$m$^2$. The glass cladding has a low-index ring surrounding the core. The low-index ring has a minimum relative refractive index $\Delta_{2MIN} < 0$. The glass cladding also has an outer cladding layer surrounding the low-index ring and having a maximum relative refractive index $\Delta_{4MAX}$ such that $\Delta_{1MAX} > \Delta_{4MAX} > \Delta_{2MIN}$. The glass core and glass cladding support the propagation and transmission of only the LP01 and LP11 modes at wavelengths greater than 1500 nm.

Another further aspect is a few mode optical fiber that includes a glass core surrounded by a glass cladding. The class core has a radius $R_1$ in the range from about 8 $\mu$m to about 14 $\mu$m, a graded refractive index profile with an alpha value greater than or equal to about 1.9 and less than about 2.7 at a wavelength of 1550 nm, a maximum relative refractive index $\Delta_{1MAX}$ from about 0.3% to about 0.6% relative to a glass cladding, and an effective area at 1550 nm greater than about 90 $\mu$m$^2$ and less than about 160 $\mu$m$^2$. The glass cladding has a low-index ring that surrounds the glass core but is spaced apart therefrom by an inner cladding with relative refractive index $\Delta_3$. The low-index ring has a minimum relative refractive index $\Delta_{2MIN} < 0$. The glass cladding also has an outer cladding layer that surrounds the low-index ring and has a maximum relative refractive index $\Delta_{4MAX}$ such that $\Delta_{1MAX} > \Delta_{4MAX} > \Delta_{2MIN}$ and $\Delta_3 > \Delta_{2MIN}$. The glass core and glass cladding support the propagation and transmission of only the LP01 and LP11 modes at wavelengths greater than 1500 nm.

Additional features and advantages of the disclosure are set forth in the detailed description that follows, and in part will be readily apparent to those skilled in the art from that description or recognized by practicing the embodiments described herein, including the detailed description that follows, the claims, as well as the appended drawings. The claims are incorporated into and constitute part of the Detailed Description as set forth below.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

## BRIEF DESCRIPTION OF THE DRAWINGS

FIG. 1 a side view of a section of a few mode optical fiber according embodiments described herein;

FIG. 2A is a cross-sectional view of the few mode fiber of FIG. 1 taken along the line A-A and illustrates a configuration for a first main example embodiment of the few mode optical fiber disclosed herein;

FIG. 2B plots the relative refractive index profile of the few mode optical fiber of FIG. 2A;

FIG. 3A cross-sectional view taken of the few mode fiber of FIG. 1 along the line A-A and illustrates a configuration for a second main example embodiment of the few mode optical fiber disclosed herein;

FIG. 3B plots the relative refractive index profile of the optical fiber of FIG. 3A;

FIG. 4A cross-sectional view of the few mode fiber of FIG. 1 taken along the line A-A and illustrates a configuration for a second main example embodiment of the few mode optical fiber disclosed herein;

FIG. 4B plots the relative refractive index profile of the few mode optical fiber of FIG. 4A;

FIG. 4C is similar to FIG. 4B, except that the relative refractive index profile includes the outer cladding having a higher relative refractive index than the inner cladding;

FIG. 4D plots the pulse broadening (ns/km) versus wavelength ($\mu$m) for different values of the maximum core relative refractive index $\Delta_{1MAX}$ (denoted "delta" in the legend) having optimum values of $\alpha$;

FIG. 5 is a schematic diagram of an example MDM optical transmission system that uses the few mode optical fiber disclosed herein;

FIG. 6 is a schematic diagram of an example fiber link that optically connects the transmitter and receiver in the MDM optical transmission system of FIG. 5, wherein the fiber link has multiple spans of few mode fiber connected by optical amplifiers; and

FIG. 7 illustrates a refractive index profile of an alternative few moded fiber embodiment.

## DETAILED DESCRIPTION

Reference will now be made in detail to embodiments of optical fibers for use as long haul transmission fibers, examples of which are illustrated in the accompanying drawings. Whenever possible, the same reference numerals are used throughout the drawings to refer to the same or like parts.

## Terminology

The following terminology will be used herein to described the optical fibers, with some of the parameters being introduced and defined below in connection with the various example embodiments:
The term "refractive index profile," as used herein, is the relationship between the refractive index or the relative refractive index and the radius of the fiber.
The term "relative refractive index," as used herein, is defined as:

$$\Delta(r)\% = 100 \times [n(r)^2 - n_{REF}^2)]/2n(r)^2,$$

where n(r) is the refractive index at radius r, unless otherwise specified. The relative refractive index is defined at 1550 nm unless otherwise specified. In one aspect, the reference index $n_{REF}$ is silica glass. In another aspect, $n_{REF}$ is the maximum refractive index of the cladding. As used herein, the relative refractive index is represented by $\Delta$ and its values are given in units of "%", unless otherwise specified. In cases where the refractive index of a region is less than the reference index $n_{REF}$, the relative refractive index is negative and is referred to as having a depressed region or depressed-index, and the minimum relative refractive index is calculated at the point at which the relative index is most negative unless otherwise specified. In cases where the refractive index of a region is greater than the reference index $n_{REF}$, the relative refractive index is positive and the region can be said to be raised or to have a positive index.

The term "updopant," as used herein, refers to a dopant which raises the refractive index of glass relative to pure, undoped $SiO_2$. The term "downdopant," as used herein, is a dopant which has a propensity to lower the refractive index of glass relative to pure, undoped $SiO_2$. An updopant may be present in a region of an optical fiber having a negative relative refractive index when accompanied by one or more other dopants which are not updopants. Likewise, one or more other dopants which are not updopants may be present in a region of an optical fiber having a positive relative refractive index. A downdopant may be present in a region of an optical fiber having a positive relative refractive index when accompanied by one or more other dopants which are not downdopants. Likewise, one or more other dopants that are not downdopants may be present in a region of an optical fiber having a negative relative refractive index.

As used herein, the "effective area" $A_{eff}$ of an optical fiber is the area of the optical fiber in which light is propagated and is defined as:

$$A_{eff} = 2\pi \frac{(\int_0^\infty E^2 r dr)^2}{\int_0^\infty E^4 r dr},$$

where E is the electric field associated with light propagated in the fiber and r is the radius of the fiber. The effective area $A_{eff}$ is determined at a wavelength of 1550 nm, unless otherwise specified.

Mode field diameter (MFD) is a measure of the spot size or beam width of light propagating in a single mode fiber. The MFD is a function of the source wavelength, fiber core radius and fiber refractive index profile. The MFD is measured using the Peterman II method, where:

$$MFD = 2w,$$

and

$$w^2 = 2 \frac{\int_0^\infty E^2 r dr}{\int_0^\infty (dE/dr)^2} r dr$$

wherein E is the electric field distribution in the fiber and r is the radius of the fiber.

The normalized wave number, or V-number of a fiber, is defined as $V = k^* R_1^* NA$, where k is the free space wave number, $2\pi/\lambda$, $\lambda$ is the wavelength, $R_1$ is the radius of the core, and NA is the numerical aperture of the fiber. The NA is given by $(n_{core}^2 - n_{clad}^2)^{1/2} = n_{clad} [2\Delta_{1MAX}/(1-2 \Delta_{1MAX})]^{1/2}$, where $n_{core}$ is the maximum refractive indices of the core, $n_{clad}$ is the refractive index of the cladding and $\Delta_{1MAX}$ is the maximum relative refractive index of the core with respect to the cladding.

Chromatic dispersion or dispersion of a fiber is the sum of the material dispersion, the waveguide dispersion, and the inter-modal dispersion.

The cutoff wavelength of a mode is the minimum wavelength beyond which a mode ceases to propagate in the optical fiber. The cutoff wavelength of a single mode fiber is the minimum wavelength at which an optical fiber will support only one propagating mode. The cutoff wavelength of a single mode fiber corresponds to the highest cutoff wavelength among the higher order modes. Typically the highest cutoff wavelength corresponds to the cutoff wavelength of the LP11 mode. A mathematical definition can be found in Single Mode Fiber Optics, Jeunhomme, pp. 39 44, Marcel Dekker, New York, 1990, wherein the theoretical fiber cutoff is described as the wavelength at which the mode propagation constant becomes equal to the plane wave propagation constant in the outer cladding. This theoretical wavelength is appropriate for an infinitely long, perfectly straight fiber that has no diameter variations.

The cabled cutoff wavelength, or "cabled cutoff" can be approximated by the 22 m cabled cutoff test described in EIA-455-170 Cable Cutoff Wavelength of Single-mode Fiber by Transmitted Power, or "FOTP-170". Cable cutoff, as used herein, means the value obtained using the approximated test. The cabled cutoff wavelength is typically 100 to 300 nm lower than the theoretical cutoff wavelength.

As used herein, the term "few moded fiber" refers to a fiber supporting the propagation of more modes than a single mode fiber but fewer modes than a normal multimode fiber. The number of propagating modes and their characteristics in a cylindrically symmetric optical fiber with an arbitrary refractive index profile is obtained by solving the scalar wave equation (see for example T.A. Lenahan, "Calculation of modes in an optical fiber using a finite element method and EISPACK," Bell Syst. Tech. J., vol. 62,no. 1, p. 2663, Feb. 1983). Light travelling in an optical fiber or other dielectric waveguide forms hybrid-type modes, which are usually referred to as LP (linear polarization) modes. The LP0p modes have two polarization degrees of freedom and are two-fold degenerate, the LPlp modes are four-fold degenerate and the LPmp modes with m > 1 are four-fold degenerate. We do not count these degeneracies when we designate the number of LP modes propagating in the fiber. For example, an optical fiber in which only the LP01 mode propagates is a single-mode fiber, even though the LP01 mode has two possible polarizations. A few-moded optical fiber in which the L01 and LP11 modes propagate supports three spatial modes since the LP11 mode is two-fold degenerate, and each mode also has two possible polarizations, giving a total of 6 modes. Thus, when a fiber is said to have two LP modes, it is meant that it supports the propagation of all of the LP01 modes and LP11 modes.

The bend resistance or bend performance of an optical fiber may be measured by the induced attenuation of light propagating through the fiber under prescribed test conditions. The bend performance of the optical fibers described herein was modeled based on a pin array bend test to compare the relative resistance of the optical fibers to bending. To perform this test, attenuation is measured for an optical fiber with essentially no induced bending loss. The optical fiber is then woven about the pin array and the attenuation is once again measured. The loss induced by bending, typically expressed in units of dB, is the difference between the two attenuation measurements. The pin array is a set of ten cylindrical pins arranged in a single row and held in a fixed vertical position on a flat surface. The pin spacing is 5 mm, center to center. The pin diameter is 0.67 mm. The optical fiber is caused to pass on opposite sides of adjacent pins. During testing, the optical fiber is placed under a tension sufficient to make the optical fiber conform to the portion of the periphery of the pins contacted by the fiber. The test pertains to macro-bend resistance of the optical fiber.

The term "a-profile" or "alpha profile," as used herein, refers to a relative refractive index profile, expressed in terms of $\Delta$ which is in units of "%", where r is the radius and which follows the equation:

$$\Delta = \Delta_0 \left[ 1 - \left( \frac{r}{r_0} \right)^{\alpha} \right],$$

where $\Delta_0$ is the maximum relative refractive index, ro is the radius of the core, r is in the range $r_i \leq r \leq r_f$, $\Delta$ is as defined above, $r_i$ is the initial point of the $\alpha$-profile, $r_f$ is the final point of the $\alpha$-profile, and $\alpha$ is a real number exponent. For a step index profile, the alpha value is greater than or equal to 10. For a graded index profile, the alpha value is less than 10. The term "parabolic," as used herein, includes substantially parabolically shaped refractive index profiles with $\alpha = 2$ as well as profiles in which the curvature of the core varies slightly from $\alpha = 2$ at one or more points in the core, e.g. profiles having a centerline dip. It is noted here that different forms for the core radius and maximum relative refractive index are used in the examples below without affecting the fundamental definition of delta ($\Delta$).

Unless otherwise specified herein, the above-referenced properties of the optical fiber disclosed herein and discussed below are modeled or measured at 1550 nm.

In the discussion below, any portion of the optical fiber that is not the core is considered part of the cladding. Also, the relative refractive index of a given region Y of fiber 10 is described generally as a function of radius $\Delta_Y (r)$, and in certain cases can have a maximum $\Delta_{YMAX}$ and/or a minimum $\Delta_{YMIN.}$ In examples where $\Delta_Y (r)$ is constant, then $\Delta_Y (r) = \Delta_{YMAX} = \Delta YMIN$ and is referred to as $\Delta_Y$.

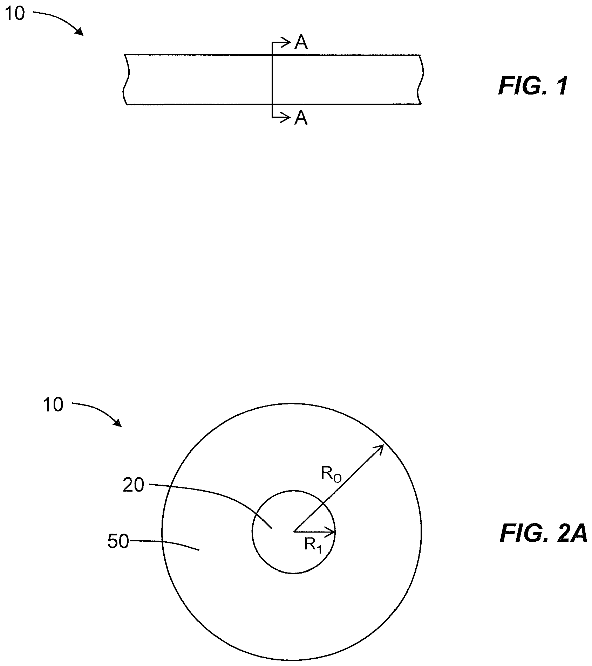

FIG. 1 is a side view of a section of a few mode optical fiber ("fiber") 10 according to the disclosure. The various example embodiments of fiber 10 are now described below with respect to example cross-sectional views of fiber 10 and plots of the corresponding example relative refractive index profiles.

**First Main Example Embodiment**

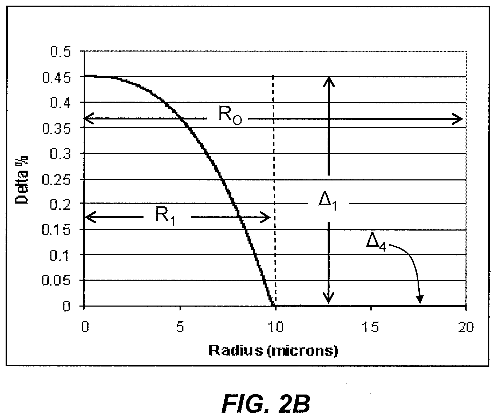

FIG. 2A is a cross-sectional view of fiber 10 taken along the line A-A in FIG. 1 and illustrates a first main example embodiment of fiber 10. FIG. 2B is the relative refractive index profile corresponding to the cross-section of FIG. 2A.

Fiber 10 of this first example embodiment includes a glass graded-index core 20 of radius $R_1$ and a glass cladding 50 surrounding the core and begins at radius $R_1$ and extends out to an outer radius $R_0$. Cladding 50 has a substantially uniform refractive index and a relative refractive index $\Delta_4 = 0$.

In the embodiments shown and described herein, core 20 comprises pure silica glass ($SiO_2$) or silica glass with one or more dopants that increase the index of refraction of the glass core relative to pure, undoped silica glass. Suitable dopants for increasing the index of refraction of the core include, without limitation, $GeO_2$, $Al_2O_3$, $P_2O_5$, $TiO_2$, $ZrO_2$, $Nb_2O_5$, $Ta_2O_5$, and/or combinations thereof.

Table 1 below sets forth seven examples (EX1 through EX7) within this first main example embodiment, where the seven examples have a value for $\alpha$ between 2.3 and 2.7. The optical properties are all modeled at a wavelength of 1550 nm, unless otherwise indicated. In an example, the magnitude of the relative delay of the LP11 mode is less than 0.25 ns/km, in another example the magnitude of the relative delay of the LP11 mode is less than 0.1 ns/km, and in another example the magnitude of the relative delay of the LP11 mode is less than 0.05 ns/km. In an example, the magnitude of the relative delay of the LP11 mode is less than 0.5 ns/km at all wavelengths between 1500 and 1600 nm. In another example, the magnitude of the relative delay of the LP11 mode is less than 0.3 ns/km at all wavelengths between 1500 and 1600 nm. In another example, the magnitude of the relative delay of the LP11 mode is less than 0.2 ns/km at all wavelengths between 1500 and 1600 nm. In an example, the effective area $A_{eff}$ is between 100 and 150 $\mu m^2$, and in another example is between 110 and 140 $\mu m^2$.

In an example, the pin array bend loss of the LP11 mode is less than 30 dB, in another example is less than 20 dB. In an example, the cutoff wavelength of the LP02 mode is less than 1800 nm, in another example is less than 1750 nm and in another example is less than 1750 nm and greater than 1600 nm. In these examples, the cabled cutoff wavelength of the LP02 mode is approximately 300 nm lower than the theoretical cutoff wavelength of the LP02 mode. In an example, the cutoff wavelength of the LP11 mode is greater than 2400 nm, in another example is greater than 2500 nm and in another example is greater than 2600 nm.

In an example, the attenuation of the LP01 mode is less than 0.21 dB/km, in another example is less than 0.20 dB/km and in another example is less than 0.19 dB/km. In an example, the attenuation of the LP11 mode is less than 0.25 dB/km, in another example is less than 0.23 dB/km and in another example is less than 0.21 dB/km. The comparative example ("CE") has a parabolic-index core with $\alpha = 2.0$, yielding a relative delay of 0.76 ns/km at 1550 nm, which is too large for practical use in MDM optical transmission systems. These optical properties are all modeled at a wavelength of 1550 nm, unless otherwise indicated.

| TABLE 1 - Examples EX1 through EX7 | | | | | | | | |
|---|---|---|---|---|---|---|---|---|
| | EX1 | EX2 | EX3 | EX4 | EX5 | EX6 | EX7 | CE |
| $\Delta_{1MAX}$ % | 0.418 | 0.418 | 0.418 | 0.418 | 0.418 | 0.418 | 0.418 | 0.418 |
| $R_1$ ($\mu$m) | 10.54 | 10.54 | 10.54 | 10.54 | 10.54 | 10.54 | 10.54 | 10.54 |
| $\alpha$ | 2.317 | 2.367 | 2.417 | 2.467 | 2.517 | 2.567 | 2.617 | 2.0 |
| V-Number | 5.67 | 5.67 | 5.67 | 5.67 | 5.67 | 5.67 | 5.67 | 5.67 |
| LP01 Attenuation, 1550 nm (dB/km) | 0.184 | 0.184 | 0.184 | 0.184 | 0.184 | 0.184 | 0.184 | 0.184 |
| LP11 Attenuation, 1550 nm dB/km | 0.200 | 0.200 | 0.200 | 0.200 | 0.200 | 0.200 | 0.200 | 0.200 |
| LP01 $A_{eff}$, 1550 nm ($\mu m^2$) | 129.9 | 130.6 | 131.4 | 132.1 | 132.8 | 133.6 | 134.3 | 125.3 |
| LP11 $A_{eff}$, 1550 nm ($\mu m^2$) | 263.2 | 262.7 | 262.3 | 261.9 | 261.5 | 261.1 | 260.9 | 268.4 |
| LP01 MFD, 1550 nm ($\mu$m) | 12.84 | 12.87 | 12.90 | 12.92 | 12.95 | 12.98 | 13.00 | 12.68 |
| LP11 MFD, 1550 nm ($\mu$m) | 13.11 | 13.08 | 13.05 | 13.03 | 13.01 | 12.99 | 12.97 | 13.33 |
| LP11 Cutoff ($\mu$m) | 2.562 | 2.576 | 2.589 | 2.602 | 2.615 | 2.628 | 2.640 | 2.464 |
| LP02 Cutoff ($\mu$m) | 1.742 | 1.748 | 1.755 | 1.761 | 1.767 | 1.772 | 1.778 | 1.696 |
| LP21 Cutoff ($\mu$m) | 1.577 | 1.586 | 1.595 | 1.603 | 1.611 | 1.620 | 1.628 | 1.514 |

(continued)

| TABLE 1 - Examples EX1 through EX7 | | | | | | | | |
|---|---|---|---|---|---|---|---|---|
| | EX1 | EX2 | EX3 | EX4 | EX5 | EX6 | EX7 | CE |
| LP01 Pin Array, 1550nm (dB) | 0.00 | 0.00 | 0.00 | 0.00 | 0.00 | 0.00 | 0.00 | 0.00 |
| LP11 Pin Array, 1550nm (dB) | 18.00 | 16.29 | 14.77 | 13.42 | 12.22 | 11.15 | 10.20 | 35.73 |
| LP01 Dispersion, 1550 nm (ps/nm/km) | 21.08 | 21.12 | 21.16 | 21.19 | 21.22 | 21.26 | 21.30 | 20.79 |
| LP11 Dispersion, 1550 nm (ps/nm/km) | 19.38 | 19.44 | 19.49 | 19.55 | 19.60 | 19.66 | 19.71 | 18.95 |
| LP01 Effective Index | 1.46873 | 1.46875 | 1.46877 | 1.46878 | 1.46880 | 1.46881 | 1.46883 | 1.46859 |
| LP11 Effective Index | 1.46865 | 1.46870 | 1.46874 | 1.46877 | 1.46881 | 1.46884 | 1.46888 | 1.46834 |
| LP11 Delay, 1500 nm (ns/km) | -0.10 | -0.02 | 0.05 | 0.11 | 0.18 | 0.24 | 0.30 | -0.63 |
| LP11 Delay, 1550 nm (ns/km) | -0.20 | -0.12 | -0.05 | -0.02 | 0.09 | 0.16 | 0.22 | -0.76 |
| LP11 Delay, 1600 nm (ns/km) | -0.32 | -0.24 | -0.16 | -0.08 | -0.01 | 0.06 | 0.13 | -0.91 |

Table 2 below sets forth seven more examples (EX8 through EX14) of this first main example embodiment where the value for $\alpha$ is between 2.3 and 2.7. In an example, the magnitude of the relative delay is less than 0.25 ns/km, in another example is less than 0.1 ns/km, and in another example is less than 0.05 ns/km. In an example, the magnitude of the relative delay of the LP11 mode is less than 0.3 ns/km at all wavelengths between 1500 and 1600 nm. In another example, the magnitude of the relative delay of the LP11 mode is less than 0.2 ns/km at all wavelengths between 1500 and 1600 nm. In another example, the magnitude of the relative delay of the LP11 mode is less than 0.15 ns/km at all wavelengths between 1500 and 1600 nm. In an example, the effective area $A_{eff}$ is between 90 and 160 $\mu m^2$, and in another example is between 100 and 150 $\mu m^2$. In an example, the pin array bend loss of the LP11 mode is less than 60 dB, in another example is less than 30 dB, and in another example is less than 20 dB.

In an example, the cutoff wavelength of the LP02 mode is less than 1800 nm, in another example is less than 1750 nm and in another example is less than 1750 nm and greater than 1600 nm. In these examples, the cabled cutoff wavelength of the LP02 mode is approximately 300 nm lower than the theoretical cutoff wavelength of the LP02 mode. In an example, the cutoff wavelength of the LP11 mode is greater than 2400 nm, in another example is greater than 2500 nm and in another example is greater than 2600 nm. In an example, the attenuation of the LP01 mode is less than 0.21 dB/km, in another example is less than 0.20 dB/km and in another example is less than 0.19 dB/km. In an example, the attenuation of the LP11 mode is less than 0.25 dB/km, in another example is less than 0.23 dB/km and in another example is less than 0.21 dB/km. These optical properties are all modeled at a wavelength of 1550 nm, unless otherwise indicated.

| TABLE 2 - Examples EX8 through EX14 | | | | | | | |
|---|---|---|---|---|---|---|---|
| | EX 8 | EX 9 | EX 10 | EX 11 | EX 12 | EX 13 | EX 14 |
| $\Delta_{1MAX}$ % | 0.452 | 0.389 | 0.454 | 0.446 | 0.472 | 0.547 | 0.337 |
| $R_1$ ($\mu m$) | 10.29 | 10.86 | 9.85 | 9.77 | 9.33 | 8.66 | 11.37 |
| $\alpha$ | 2.417 | 2.467 | 2.517 | 2.567 | 2.617 | 2.617 | 2.517 |
| V-Number | 5.75 | 5.63 | 5.52 | 5.42 | 5.33 | 5.33 | 5.49 |

(continued)

| TABLE 2 - Examples EX8 through EX14 | | | | | | | |
|---|---|---|---|---|---|---|---|
| | **EX 8** | **EX 9** | **EX 10** | **EX 11** | **EX 12** | **EX 13** | **EX 14** |
| LP01 Attenuation, 1550 nm (dB/km) | 0.184 | 0.183 | 0.185 | 0.185 | 0.185 | 0.186 | 0.183 |
| LP11 Attenuation, 1550 nm (dB/km) | 0.201 | 0.198 | 0.202 | 0.202 | 0.204 | 0.209 | 0.196 |
| LP01 $A_{eff}$, 1550 nm ($\mu$m$^2$) | 123.3 | 141.1 | 118.9 | 119.5 | 111.4 | 95.9 | 159.5 |
| LP11 $A_{eff}$, 1550 nm ($\mu$m$^2$) | 245.1 | 280.2 | 236.1 | 237.2 | 221.0 | 190.5 | 317.3 |
| LP01 MFD, 1550 nm ($\mu$m) | 12.49 | 13.36 | 12.26 | 12.29 | 11.86 | 11.00 | 14.20 |
| LP11 MFD, 1550 nm ($\mu$m) | 12.61 | 13.49 | 12.39 | 12.42 | 12.00 | 11.14 | 14.37 |
| LP11 Cutoff ($\mu$m) | 2.629 | 2.586 | 2.548 | 2.517 | 2.485 | 2.484 | 2.532 |
| LP02 Cutoff($\mu$m) | 1.781 | 1.750 | 1.721 | 1.698 | 1.674 | 1.673 | 1.710 |
| LP21 Cutoff ($\mu$m) | 1.619 | 1.593 | 1.570 | 1.552 | 1.532 | 1.532 | 1.561 |
| LP01 Pin Array, 1550nm (dB) | 0.00 | 0.01 | 0.00 | 0.00 | 0.00 | 0.00 | 0.24 |
| LP11 Pin Array, 1550nm (dB) | 7.11 | 22.57 | 9.38 | 11.92 | 9.18 | 2.87 | 56.57 |
| LP01 Dispersion, 1550 nm (ps/nm/km) | 21.12 | 21.24 | 21.12 | 21.14 | 21.09 | 20.96 | 21.32 |
| LP11 Dispersion, 1550 nm (ps/nm/km) | 19.46 | 19.66 | 19.10 | 18.99 | 18.64 | 18.11 | 19.77 |
| LP01 Effective Index | 1.46927 | 1.46835 | 1.46934 | 1.46923 | 1.46964 | 1.47077 | 1.46759 |
| LP11 Effective Index | 1.46925 | 1.46834 | 1.46932 | 1.46921 | 1.46961 | 1.47074 | 1.46757 |
| LP11 Delay, 1500 nm (ns/km) | 0.092 | 0.089 | 0.112 | 0.120 | 0.137 | 0.154 | 0.069 |
| LP11 Delay, 1550 nm (ns/km) | -0.001 | 0.001 | 0.000 | 0.000 | 0.000 | -0.006 | -0.017 |
| LP11 Delay, 1600 nm (ns/km) | -0.108 | -0.103 | -0.134 | -0.142 | -0.163 | -0.196 | -0.120 |

Table 3 below sets forth four more examples (EX15 through EX18) of this first main example embodiment where the value for $\alpha$ is between 2.3 and 10.0. In an example, the value for $\alpha$ is between 2.3 and 5.0. In another example, the value for $\alpha$ is between 2.3 and 3. In an example, the magnitude of the relative delay is less than 0.25 ns/km, in another example is less than 0.1 ns/km, and in another example is less than 0.05 ns/km. In an example, the magnitude of the relative delay of the LP11 mode is less than 0.5 ns/km at all wavelengths between 1500 and 1600 nm. In another example, the magnitude of the relative delay of the LP11 mode is less than 0.3 ns/km at all wavelengths between 1500 and 1600 nm. In another example, the magnitude of the relative delay of the LP11 mode is less than 0.2 ns/km at all wavelengths between 1500 and 1600 nm.

In an example, the effective area $A_{eff}$ is between 90 and 160 $\mu$m$^2$, and in another example is between 100 and 150 $\mu$m$^2$. In an example, the pin array bend loss of the LP11 mode is less than 100 dB, in another example is less than 30 dB, and in another example is less than 20 dB. In an example, the cutoff wavelength of the LP02 mode is less than 1800 nm, in another example is less than 1750 nm and in another example is less than 1750 nm and greater than 1600 nm. In these examples, the cabled cutoff wavelength of the LP02 mode is approximately 300 nm lower than the theoretical cutoff wavelength of the LP02 mode. In an example, the cutoff wavelength of the LP11 mode is greater than 2000 nm, in another example is greater than 2200 nm and in another example is greater than 2400 nm. In an example, the attenuation of the LP01 mode is less than 0.21 dB/km, in another example is less than 0.20 dB/km and in another example is less than 0.19 dB/km. In an example, the attenuation of the LP11 mode is less than 0.25 dB/km, in another example is less than 0.23 dB/km and in another example is less than 0.21 dB/km. These optical properties are all modeled at a wavelength of 1550 nm, unless otherwise indicated.

| TABLE 3 - Examples EX15 through EX18 | | | | |
|---|---|---|---|---|
| | **EX 15** | **EX 16** | **EX 17** | **EX 18** |
| $\Delta_{1MAX}$ % | 0.400 | 0.400 | 0.500 | 0.500 |
| $R_1$ ($\mu$m) | 7.50 | 10.70 | 8.30 | 9.50 |

(continued)

| TABLE 3 - Examples EX15 through EX18 | | | | |
|---|---|---|---|---|
| | **EX 15** | **EX 16** | **EX 17** | **EX 18** |
| A | 5 | 2.5 | 3 | 2.5 |
| V-Number | 3.94 | 5.62 | 4.88 | 5.59 |
| LP01 Attenuation, 1550 nm (dB/km) | 0.187 | 0.184 | 0.186 | 0.185 |
| LP11 Attenuation, 1550 nm (dB/km) | 0.209 | 0.199 | 0.209 | 0.205 |
| LP01 $A_{eff}$, 1550 nm ($\mu m^2$) | 108.7 | 137.6 | 99.0 | 109.1 |
| LP11 $A_{eff}$, 1550 nm ($\mu m^2$) | 213.1 | 272.1 | 195.2 | 216.3 |
| LP01 MFD, 1550 nm ($\mu m$) | 11.60 | 13.18 | 11.15 | 11.74 |
| LP11 MFD, 1550 nm ($\mu m$) | 11.83 | 13.28 | 11.29 | 11.85 |
| LP11 Cutoff ($\mu m$) | 2.092 | 2.592 | 2.349 | 2.575 |
| LP02 Cutoff ($\mu m$) | 1.354 | 1.752 | 1.567 | 1.741 |
| LP21 Cutoff ($\mu m$) | 1.303 | 1.597 | 1.452 | 1.586 |
| LP01 Pin Array, 1550nm (dB) | 0.001 | 0.000 | 0.000 | 0.000 |
| LP11 Pin Array, 1550nm (dB) | 99.8 | 18.2 | 11.0 | 3.9 |
| LP01 Dispersion, 1550 nm (ps/nm/km) | 21.27 | 21.24 | 21.09 | 21.05 |
| LP11 Dispersion, 1550 nm (ps/nm/km) | 15.25 | 19.61 | 17.39 | 18.94 |
| LP01 Effective Index | 1.4689 3 | 1.46852 | 1.47018 | 1.47002 |
| LP11 Effective Index | 1.46890 | 1.46852 | 1.47016 | 1.47000 |
| LP11 Delay, 1500 nm (ns/km) | 0.44 | 0.13 | 0.27 | 0.14 |
| LP11 Delay, 1550 nm (ns/km) | 0.09 | 0.04 | 0.06 | 0.03 |
| LP11 Delay, 1600 nm (ns/km) | -0.31 | -0.06 | -0.18 | -0.11 |

**Second Main Example Embodiment**

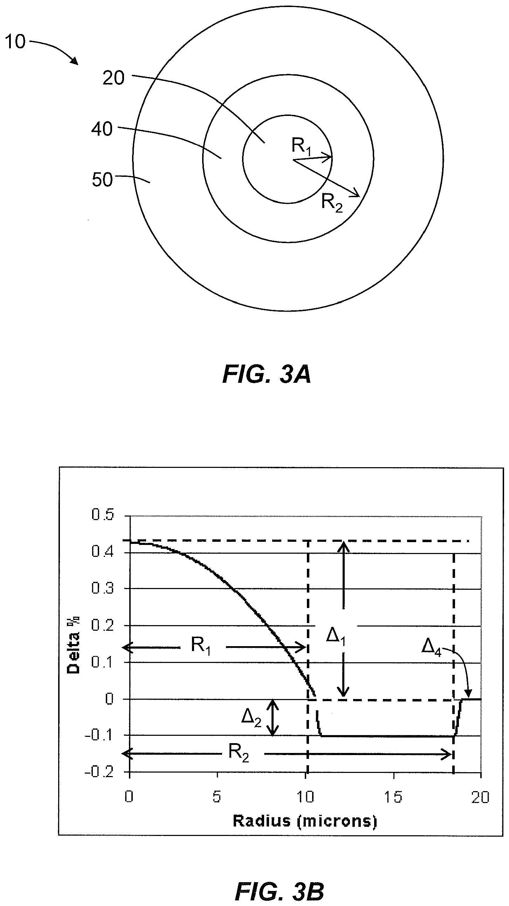

FIG. 3A is a cross-sectional view of fiber 10 taken along the line A-A in FIG. 1 and illustrates a second main example embodiment of fiber 10. FIG. 3B is the relative refractive index profile corresponding to the cross-section of FIG. 3A. Fiber 10 of this second example embodiment includes a low-index ring 40 disposed immediately adjacent and surrounding the graded-index glass core 20. Cladding 50 immediately surrounds ring 40. Ring 40 has an inner radius $R_1$, an outer radius $R_2$, a relative refractive index $A_2$, and a minimum relative refractive index $\Delta_{2MIN}$. In an example, $\Delta_2 = \Delta_{2MIN}$ as shown.

Table 4 below sets forth three examples EX19-EX21 of this second main example embodiment. The examples have a value for $\alpha$ between 1.9 and 2.1. The minimum relative refractive index $\Delta_{2MIN}$ of low-index ring 40 is less than 0, and in these examples, $\Delta_{2MIN}$ < -0.05%. In an example, the outer radius $R_2$ of low-index ring 40 is greater than 12 $\mu m$, in another example is greater than 14 $\mu m$ and in another example is greater than 16 $\mu m$. In an example, the magnitude of the relative delay is less than 0.25 ns/km, in another example is less than 0.1 ns/km, and in another example is less than 0.05 ns/km. In an example, the magnitude of the relative delay of the LP11 mode is less than 0.3 ns/km at all wavelengths between 1500 and 1600 nm. In another example, the magnitude of the relative delay of the LP11 mode is less than 0.2 ns/km at all wavelengths between 1500 and 1600 nm. In another example, the magnitude of the relative delay of the LP11 mode is less than 0.1 ns/km at all wavelengths between 1500 and 1600 nm.

In an example, the effective area $A_{eff}$ is between 90 $\mu m^2$ and 160 $\mu m^2$, in another example is between 100 $\mu m^2$ and 150 $\mu m^2$. In an example, the pin array bend loss of the LP11 mode is less than 60 dB, in another example is less than 30 dB, and in another example is than 20 dB. In an example, the cutoff wavelength of the LP02 mode is preferable less than 1600 nm, in another example is less than 1550 nm and in another example is less than 1550 nm and greater than 1400 nm. In these examples, the cabled cutoff wavelength of the LP02 mode is approximately 100 nm lower than the theoretical cutoff wavelength of the LP02 mode. In an example, the cutoff wavelength of the LP11 mode is greater than 2000 nm and in another example is greater than 2200 nm. These optical properties are all modeled at a wavelength of 1550 nm, unless otherwise indicated.

| TABLE 4 - Examples EX19 - EX21 | | | |
|---|---|---|---|
| | EX19 | EX20 | EX21 |
| $\Delta_{1MAX}$ % | 0.391 | 0.433 | 0.458 |
| $R_1$ ($\mu$m) | 10.75 | 10.65 | 10.36 |
| A | 2.05 | 2.05 | 2.05 |
| $\Delta_{2MIN}$ % | -0.1 | -0.1 | -0.1 |
| $R_2$ ($\mu$m) | 10.75 | 10.65 | 10.36 |
| $R_3$ ($\mu$m) | 18.75 | 18.65 | 18.36 |
| V-Number | 5.58 | 5.82 | 5.83 |
| LP01 Attenuation, 1550 nm (dB/km) | 0.184 | 0.184 | 0.184 |
| LP11 Attenuation, 1550 nm (dB/km) | 0.199 | 0.200 | 0.202 |
| LP01 $A_{eff}$, 1550 nm ($\mu$m$^2$) | 131.3 | 123.7 | 117.0 |
| LP11 $A_{eff}$, 1550 nm ($\mu$m$^2$) | 262.9 | 247.7 | 234.8 |
| LP01 MFD, 1550 nm ($\mu$m) | 12.92 | 12.54 | 12.20 |
| LP11 MFD, 1550 nm ($\mu$m) | 12.98 | 12.59 | 12.27 |
| LP11 Cutoff ($\mu$m) | 2.198 | 2.304 | 2.311 |
| LP02 Cutoff ($\mu$m) | 1.443 | 1.510 | 1.514 |
| LP21 Cutoff ($\mu$m) | 1.441 | 1.505 | 1.508 |
| LP01 Pin Array, 1550nm (dB) | 0.00 | 0.00 | 0.00 |
| LP11 Pin Array, 1550nm (dB) | 42.00 | 15.95 | 11.18 |
| LP01 Dispersion, 1550 nm (ps/nm/km) | 21.24 | 21.16 | 21.10 |
| LP11 Dispersion, 1550 nm (ps/nm/km) | 20.65 | 20.64 | 20.50 |
| LP01 Effective Index | 1.46826 | 1.46887 | 1.46923 |
| LP11 Effective Index | 1.46825 | 1.46886 | 1.46921 |
| LP11 Delay, 1500 nm (ns/km) | 0.02 | 0.023 | 0.005 |
| LP11 Delay, 1550 nm (ns/km) | -0.008 | -0.002 | -0.025 |
| LP11 Delay, 1600 nm (ns/km) | -0.047 | -0.036 | -0.064 |

**Third Main Example Embodiment**

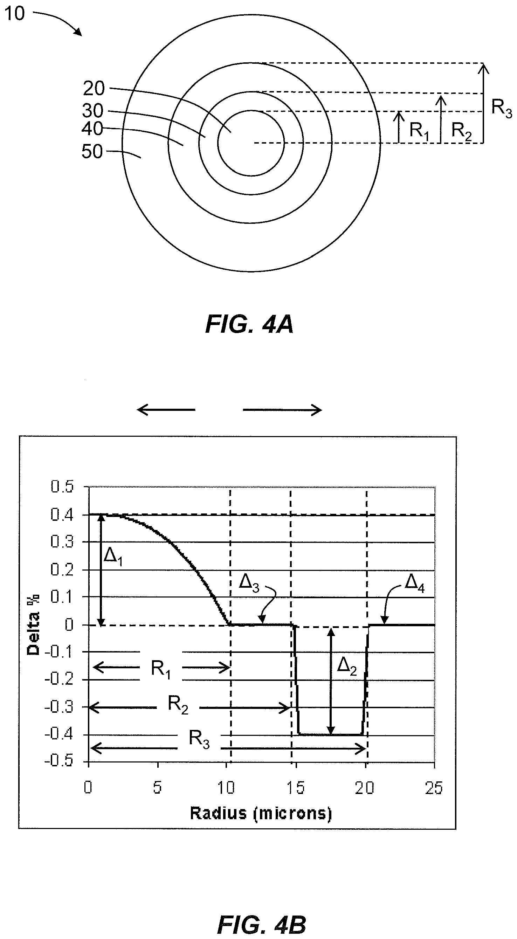

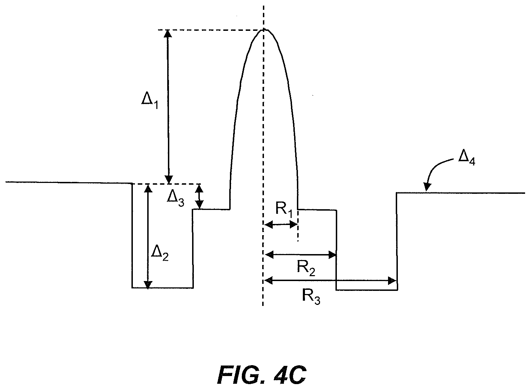

FIG. 4A is a cross-sectional view of fiber 10 taken along the line A-A in FIG. 1 and illustrates a third main example embodiment of fiber 10. FIG. 4B plots an example refractive index profile corresponding to the cross-section of FIG. 4A, while FIG. 4C plots another example relative refractive index profile. Fiber 10 of this third example embodiment is similar to that of the second example embodiment except that it further includes an inner cladding 30 between core 20 and ring 40. Inner cladding 30 thus surrounds core 20 so that ring 40 is no longer in contact with (i.e., is no longer immediately adjacent) core 20. Inner cladding 30 has an inner radius $R_1$ and an outer radius $R_2$, and low-index ring 40 now has an inner radius $R_2$, an outer radius $R_3$ and a radial width $R_3 - R_2$. Inner cladding 30 has a radial width $R_2 - R_1$. In an example, inner cladding has a relative refractive $\Delta_3 = \Delta_4 = 0$.

In an example, inner cladding 30 may be formed like cladding 50 in that it may comprise pure silica glass ($SiO_2$), silica glass with one or more dopants that increase the index of refraction (e.g., $GeO_2$, $Al_2O_3$, $P_2O_5$, $TiO_2$, $ZrO_2$, $Nb_2O_5$ and/or $Ta_2O_5$), such as when the cladding is "up-doped," or silica glass with a dopant which decreases the index of refraction, such as fluorine, such as when the inner cladding is "down-doped"

Table 5 below sets forth six examples EX22 through EX27 of this third main example embodiment of fiber 10. Examples EX22 through EX26 comprise a graded index core 20 with a value for $\alpha$ between 2.3 and 2.7. Example 27 comprises a graded-index core 20 with a value for $\alpha$ between 1.9 and 2.1. In an example, the minimum relative refractive index $\Delta_{2MIN}$ of low-index ring 40 is less than -0.1%, in another example $\Delta_{2MIN} < -0.2\%$, in another example, $\Delta_{2MIN} \leq -0.3\%$, and in another example $-0.7\% \leq \Delta_{2MIN} \leq -0.3\%$. In an example, the outer radius $R_3$ of low-index ring 40 is greater than 14 $\mu$m, in another example the outer radius $R_3$ is greater than 16 $\mu$m and in another example the outer radius $R_3$ is greater than 18 $\mu$m. In an example, the inner radius $R_2$ oflow-index ring 40 is greater than 12 $\mu$m, in another example $R_2$ is greater than 14 $\mu$m and in another example $R_2$ is greater or equal to 16 $\mu$m. In an example, the radial width of low-index ring 40 as defined by $R_3 - R_2$, is greater than 2 $\mu$m, in another example is greater than 3 $\mu$m and in another example is greater than 4 $\mu$m.

In an example embodiment, the magnitude of the relative delay is less than 0.25 ns/km, in another example is less than 0.1 ns/km, and in another example is less than 0.05 ns/km. In an example, the magnitude of the relative delay of the LP11 mode is less than 0.5 ns/km at all wavelengths between 1500 and 1600 nm. In another example, the magnitude of the relative delay of the LP11 mode is less than 0.3 ns/km at all wavelengths between 1500 and 1600 nm. In another example, the magnitude of the relative delay of the LP11 mode is less than 0.2 ns/km at all wavelengths between 1500 and 1600 nm.

In an example, the effective area $A_{eff}$ is between 90 $\mu$m$^2$ and 160 $\mu$m$^2$, and in another example is between 100 $\mu$m$^2$ and 150 $\mu$m$^2$. In an example, the pin array bend loss of the LP11 mode is less than 60 dB, in another example is less than 30 dB, and in another example is than 20 dB. In an example, the cutoff wavelength of the LP02 mode is less than 1600 nm, in another example is less than 1550 nm and in another example is less than 1550 nm and greater than 1400 nm. In these examples, the cabled cutoff wavelength of the LP02 mode is approximately 100 nm lower than the theoretical cutoff wavelength of the LP02 mode. In an example, the cutoff wavelength of the LP11 mode is greater than 2000 nm, in another embodiment is greater than 2200 nm and in another example is greater than 2400 nm. These optical properties are all modeled at a wavelength of 1550 nm, unless otherwise indicated.

| TABLE 5 - Examples EX22 - EX27 | | | | | | |
|---|---|---|---|---|---|---|
| | **EX22** | **EX23** | **EX 24** | **E 25** | **EX26** | **EX27** |
| $\Delta_{1MAX}$ % | 0.405 | 0.364 | 0.364 | 0.395 | 0.437 | 0.4 |
| $R_1$ ($\mu$m) | 10.13 | 10.58 | 10.58 | 9.91 | 9.70 | 10.9 |
| A | 2.517 | 2.517 | 2.517 | 2.617 | 2.517 | 2 |
| $D_{2MIN}$ % | -0.4 | -0.4 | -0.3 | -0.4 | -0.4 | -0.4 |
| $R_2$ ($\mu$m) | 16 | 16 | 16 | 16 | 15 | 12.5 |
| $R_3$ ($\mu$m) | 20 | 20 | 20 | 20 | 20 | 18 |
| V-Number | 5.36 | 5.30 | 5.30 | 5.18 | 5.33 | 5.73 |
| LP01 Attenuation, 1550 nm (dB/km) | 0.184 | 0.183 | 0.183 | 0.184 | 0.185 | 0.184 |
| LP11 Attenuation, 1550 nm (dB/km) | 0.200 | 0.198 | 0.198 | 0.200 | 0.202 | 0.199 |
| LP01 $A_{eff}$, 1550 nm ($\mu$m$^2$) | 129.4 | 142.5 | 142.5 | 129.2 | 119.2 | 132.4 |
| LP11 $A_{eff}$, 1550 nm ($\mu$m$^2$) | 257.0 | 282.5 | 283.0 | 256.5 | 236.8 | 282.4 |
| LP01 MFD, 1550 nm ($\mu$m) | 12.79 | 13.42 | 13.42 | 12.78 | 12.28 | 13.03 |
| LP11 MFD, 1550 nm ($\mu$m) | 12.91 | 13.52 | 13.55 | 12.91 | 12.39 | 13.66 |
| LP11 Cutoff ($\mu$m) | 2.304 | 2.263 | 2.276 | 2.252 | 2.284 | 2.49 |
| LP02 Cutoff ($\mu$m) | 1.510 | 1.486 | 1.490 | 1.473 | 1.499 | 1.72 |
| LP21 Cutoff ($\mu$m) | 1.503 | 1.484 | 1.486 | 1.469 | 1.494 | 1.531 |
| LP01 Pin Array, 1550nm (dB) | 0.00 | 0.00 | 0.00 | 0.00 | 0.00 | 0.03 |
| LP11 Pin Array, 1550nm (dB) | 16.04 | 30.24 | 33.79 | 22.27 | 9.79 | 40.09 |
| LP01 Dispersion, 1550 nm (ps/nm/km) | 21.20 | 21.28 | 21.27 | 21.22 | 21.14 | 20.86 |
| LP11 Dispersion, 1550 nm (ps/nm/km) | 19.76 | 20.16 | 20.04 | 19.59 | 19.64 | 19.20 |

(continued)

| TABLE 5 - Examples EX22 - EX27 | | | | | | |
|---|---|---|---|---|---|---|
| | **EX22** | **EX23** | **EX 24** | **E 25** | **EX26** | **EX27** |
| LP01 Effective Index | 1.46861 | 1.46800 | 1.46800 | 1.46849 | 1.46909 | 1.46833 |
| LP11 Effective Index | 1.46859 | 1.46799 | 1.46798 | 1.46847 | 1.46907 | 1.46811 |
| LP11 Delay, 1500 nm (ns/km) | 0.086 | 0.091 | 0.074 | 0.098 | 0.089 | 0.053 |
| LP11 Delay, 1550 nm (ns/km) | 0 | -0.022 | -0.001 | 0 | -0.001 | 0.076 |
| LP11 Delay, 1600 nm (ns/km) | -0.095 | -0.053 | -0.083 | -0.108 | -0.101 | 0.101 |

FIG. 4C illustrates a relative refractive index profile similar to that of FIG. 4B, except that is represents a more generalized version of the third main example embodiment wherein the effective refractive index $\Delta_3$ of inner cladding 30 is smaller than that of (outer) cladding 50, i.e., $\Delta_3 < \Delta_4$. In an example, inner cladding 30 has a relative refractive index $\Delta_3$ between -0.1 % and 0.05 %. Low-index ring 40 is disposed immediately adjacent inner cladding 30 and has a starting (inner) radius of $R_2$ and an ending (outer) radius of $R_3$. Ring 40 thus has a radial width of $R_3 - R_2$ and has a minimum relative refractive index $\Delta_{2MIN}$ relative to cladding 50. In an example, the minimum relative refractive index $\Delta_{2MIN}$ is between -0.1% and -0.7%, and in another example is between -0.3% and -0.5%.

In an example, the radial width $R_3 - R_2$ of low-index ring 40 is between 0 $\mu$m and 15 $\mu$m, in another example is between 2 $\mu$m to 8 $\mu$m and in another example is between 4 $\mu$m to 6 $\mu$m. In an example, low-index ring 40 has an index profile other than a step profile, such as a triangular or parabolic profile that can provide additional mode-field control.

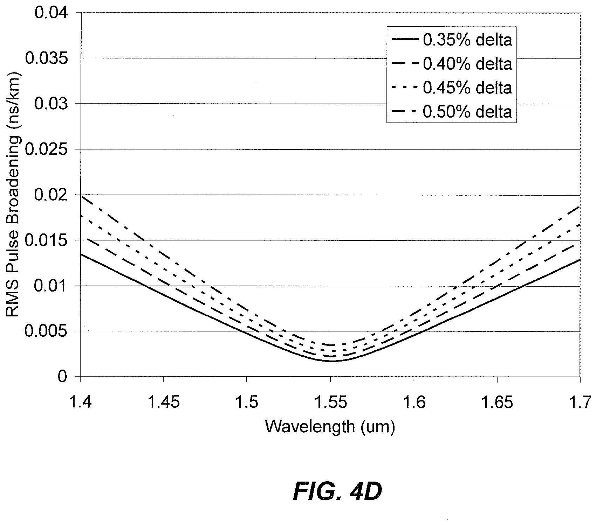

FIG. 4D shows the RMS pulse broadening (ns/km) as a function of wavelength ($\mu$m) for four maximum core relative refractive index values $\Delta_{1MAX}$ (denoted by "delta" in the legend) having optimum alpha values. It can be seen that the within the wavelength window of 1.5 to 1.6 $\mu$m, the RMS broadening (which is equal to the LP 11 mode delay in a two mode fiber) varies by less than 0.1 ns/km, which is suitable for MDM transmission systems.

**Fourth Main Example Embodiment**

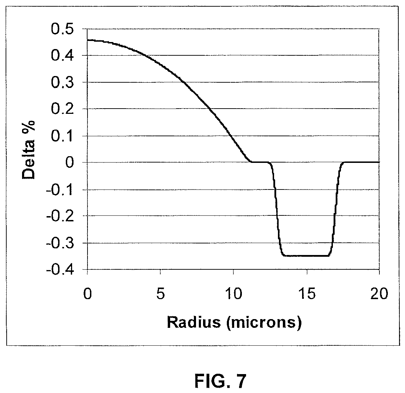

Table 6 illustrates the attributes of five index profiles for which variations of the radius and alpha parameter of the core change the sign of the differential mode group delay and differential mode group delay slopes. In example 28, the trench is adjacent to the graded index core, but is spaced from the core in examples 29-32 by an offset $R_2 - R_1$. The refractive index profile for Example 31 is plotted in FIG. 7. Each of embodiments 28 - 32 yields very low differential mode delays when made according to the prescribed dimensions. The LP01 effective area $A_{eff}$ of fibers 6-10 is greater than 120 $\mu$m$^2$, more preferably between 120 and 200 $\mu$m$^2$. In an example, the theoretical cutoff wavelength of the LP02 mode is less than 2400 nm, in another example is less than 2000 nm and in another example is less than 1800 nm. In these examples, the cabled cutoff wavelength of the LP02 mode is approximately 300 nm lower than the theoretical cutoff wavelength of the LP02 mode. In an example, the theoretical cutoff wavelength of the LP11 mode is greater than 2000 nm, in another example is greater than 2200 nm and in another example is greater than 2400 nm. In an example, the attenuation of the LP01 mode is less than 0.21 dB/km, in another example is less than 0.20 dB/km and in another example is less than 0.19 dB/km. In an example, the attenuation of the LP11 mode is less than 0.25 dB/km, in another example is less than 0.23 dB/km and in another example is less than 0.21 dB/km. These optical properties are all modeled at a wavelength of 1550 nm, unless otherwise indicated.

Table 6

| Example | 28 | 28 | 30 | 31 | 32 |
|---|---|---|---|---|---|
| $\Delta 1$ (%) | 0.46 | 0.46 | 0.46 | 0.46 | 0.46 |
| R1 ($\mu$m) | 11.1 | 11.1 | 11.1 | 11.1 | 11.1 |
| Alpha | 1.96 | 2.005 | 2.02 | 2.04 | 2.06 |
| R2 ($\mu$m) | 11.18 | 11.98 | 12.41 | 12.98 | 13.39 |
| $\Delta 2$ (%) | -0.15 | -0.2 | -0.25 | -0.35 | -0.45 |
| R3 ($\mu$m) | 17 | 17 | 17 | 17 | 18 |
| R1/R2 | 0.99 | 0.93 | 0.89 | 0.86 | 0.83 |

(continued)

| Example | 28 | 28 | 30 | 31 | 32 |
|---|---|---|---|---|---|
| Theoretical LP02 Cutoff ($\mu$m) | 1.591 | 1.609 | 1.613 | 1.620 | 1.626 |
| Theoretical LP11 Cutoff ($\mu$m) | 2.420 | 2.440 | 2.441 | 2.443 | 2.447 |
| LP01 Dispersion (ps/nm/km) | 21.12 | 21.10 | 21.10 | 21.09 | 21.09 |
| LP01 Effective Area ($\mu$m$^2$) | 123.4 | 124.5 | 124.9 | 125.3 | 125.8 |
| LP01 MFD ($\mu$m) | 12.53 | 12.59 | 12.61 | 12.63 | 12.65 |
| LP11 Dispersion (ps/nm/km) | 21.06 | 21.08 | 21.11 | 21.12 | 21.11 |
| LP11 Effective Area ($\mu$m$^2$) | 123.8 | 125.0 | 125.4 | 125.9 | 126.2 |
| LP01-LP02 delay at 1530 (ns/km) | 0.0106 | 0.0032 | -0.0022 | -0.0055 | 0.0011 |
| LP01-LP02 delay at 1550 (nm/km) | 0.0107 | 0.0032 | -0.002 | -0.0053 | 0.0011 |
| LP01-LP02 delay at 1565 (nm/km) | 0.0103 | 0.0029 | -0.002 | -0.0053 | 0.0012 |
| LP01-LP02 delay slope at (ps/nm/km) | -0.009 | -0.009 | 0.006 | 0.006 | 0.003 |

Table 7 illustrates the index profiles for four variations of Example 31 in which variations of the radius and alpha parameter of the core change the sign of the differential mode group delay and differential mode group delay slopes. FIG. 7 illustrates the refractive index profile of Example 31c. Each of embodiments 31a-31d yields very low differential mode delays when made according to the prescribed dimensions. Examples 31a and 31d have similar alpha values, with $|\alpha_i - \alpha_j| < 0.2$, and slightly different core radii with $| R_{1i} - R_{1j} | > 0.2$ $\mu$m. Example 31a yields negative differential mode delays at 1530, 1550 and 1565 nm, with a negative differential mode delay slope, while Example 31a yields positive differential mode delays at 1530, 1550 and 1565 nm, with a positive differential mode delay slope. Combining these two modeled fiber examples in approximately a 1:1 length ratio yields a span with nearly zero differential mode delay and differential mode delay slope. Example 31b yields positive differential mode delays at 1530, 1550 and 1565 nm, with a negative differential mode delay slope, while Example 31c yields negative differential mode delays at 1530, 1550 and 1565 nm, with a positive differential mode delay slope. Combining these two modeled fiber examples in approximately a 1:1 length ratio yields a span with nearly zero differential mode delay and differential mode delay slope.

Table 7

| Example | 31a | 31b | 31c | 31d |
|---|---|---|---|---|
| $\Delta$1 (%) | 0.456 | 0.465 | 0.465 | 0.466 |
| R1 ($\mu$m) | 11.01 | 11.16 | 10.89 | 11.23 |
| Alpha | 2.026 | 2.095 | 1.991 | 2.038 |
| R2 ($\mu$m) | 13.51 | 13.25 | 12.45 | 12.48 |
| $\Delta$2 (%) | -0.35 | -0.35 | -0.35 | -0.35 |
| R3 ($\mu$m) | 17 | 17 | 17 | 17 |
| R1/R2 | 0.815 | 0.842 | 0.875 | 0.900 |
| LP02 Cutoff ($\mu$m) | 1.614 | 1.653 | 1.689 | 1.628 |
| LP11 Cutoff ($\mu$m) | 2.436 | 2.499 | 2.544 | 2.453 |
| LP01 Dispersion (ps/nm/km) | 21.01 | 21.11 | 21.22 | 21.17 |
| LP01 Effective Area ($\mu$m$^2$) | 124.9 | 126.3 | 131.8 | 125.8 |
| LP01 MFD ($\mu$m) | 12.62 | 12.67 | 12.94 | 12.64 |
| LP11 Dispersion (ps/nm/km) | 20.81 | 21.05 | 21.73 | 21.44 |
| LP11 Effective Area ($\mu$m$^2$) | 126.8 | 126.2 | 130.4 | 125.1 |
| LP01-LP02 delay at 1530 (ns/km) | -0.137 | 0.050 | -0.029 | 0.121 |

(continued)

| Example | 31a | 31b | 31c | 31d |
|---|---|---|---|---|
| LP01-LP02 delay at 1550 (nm/km) | -0.144 | 0.048 | -0.026 | 0.129 |
| LP01-LP02 delay at 1565 (nm/km) | -0.137 | 0.050 | -0.029 | 0.121 |
| LP01-LP02 delay slope at (ps/nm/km) | -0.0004 | -0.0001 | 0.0002 | 0.0004 |

Table 8 illustrates the attributes of an additional six index profiles for which variations of the radius and alpha parameter of the core change the sign of the differential mode group delay and differential mode group delay slopes. In embodiments 33-38, the trench is spaced from the core by an offset R2 - R1. Each of embodiments 33-38 yields very low differential mode delays when made according to the prescribed dimensions. The LP01 effective area Aeff of fibers 28-32 is greater than 120 $\mu m^2$, more preferably between 120 and 200 $\mu m^2$. In an example, the theoretical cutoff wavelength of the LP02 mode is less than 2400 nm, in another example is less than 2000 nm and in another example is less than 1800 nm. In these examples, the cabled cutoff wavelength of the LP02 mode is approximately 300 nm lower than the theoretical cutoff wavelength of the LP02 mode. In an example, the theoretical cutoff wavelength of the LP11 mode is greater than 2000 nm, in another example is greater than 2200 nm and in another example is greater than 2400 nm. In an example, the attenuation of the LP01 mode is less than 0.21 dB/km, in another example is less than 0.20 dB/km and in another example is less than 0.19 dB/km. In an example, the attenuation of the LP11 mode is less than 0.25 dB/km, in another example is less than 0.23 dB/km and in another example is less than 0.21 dB/km. These optical properties are all modeled at a wavelength of 1550 nm, unless otherwise indicated.

Table 8

| Example | 33 | 34 | 35 | 36 | 37 | 38 |
|---|---|---|---|---|---|---|
| $\Delta 1$ (%) | 0.477 | 0.436 | 0.455 | 0.466 | 0.463 | 0.454 |
| R1 ($\mu$m) | 10.94 | 11.04 | 11.39 | 10.79 | 11.10 | 11.02 |
| Alpha | 2.021 | 2.036 | 2.020 | 2.028 | 2.045 | 2.030 |
| R2 ($\mu$m) | 12.34 | 12.73 | 12.92 | 12.46 | 12.77 | 12.78 |
| $\Delta 2$ (%) | -0.30 | -0.30 | -0.28 | -0.33 | -0.32 | -0.32 |
| R3 ($\mu$m) | 17 | 17 | 17 | 17 | 17 | 17 |
| R1/R2 | 0.887 | 0.867 | 0.882 | 0.866 | 0.869 | 0.862 |
| LP02 Cutoff ($\mu$m) | 1.618 | 1.568 | 1.648 | 1.582 | 1.625 | 1.597 |
| LP11 Cutoff ($\mu$m) | 2.441 | 2.364 | 2.494 | 2.383 | 2.454 | 2.408 |
| LP01 Dispersion (ps/nm/km) | 21.08 | 21.14 | 21.10 | 21.08 | 21.10 | 21.10 |
| LP01 Effective Area ($\mu$m$^2$) | 120.8 | 128.0 | 128.9 | 120.8 | 124.6 | 125.1 |
| LP01 MFD ($\mu$m) | 12.40 | 12.77 | 12.81 | 12.40 | 12.59 | 12.62 |
| LP11 Dispersion (ps/nm/km) | 21.17 | 21.15 | 21.14 | 21.14 | 21.15 | 21.12 |
| LP11 Effective Area ($\mu$m$^2$) | 121.2 | 128.6 | 129.5 | 121.5 | 124.8 | 125.8 |
| LP01-LP02 delay at 1530 (ns/km) | 0.0135 | -0.004 | -0.0087 | -0.0126 | 0.0186 | -0.0197 |
| LP01-LP02 delay at 1550 (nm/km) | 0.0155 | -0.0038 | -0.0083 | -0.012 | 0.0193 | -0.0198 |
| LP01-LP02 delay at 1565 (nm/km) | 0.017 | -0.0037 | -0.0081 | -0.0115 | 0.0197 | -0.02 |
| LP01-LP02 delay slope at (ps/nm/km) | 0.01 | 0.0086 | 0.017 | 0.031 | 0.031 | -0.009 |

**MDM optical transmission system**

The few mode optical fibers 10 according to the disclosure have a low loss and a small differential group delay, and are suitable for use in optical transmission systems, particularly those that utilize MDM and that are configured for long-haul transmission.

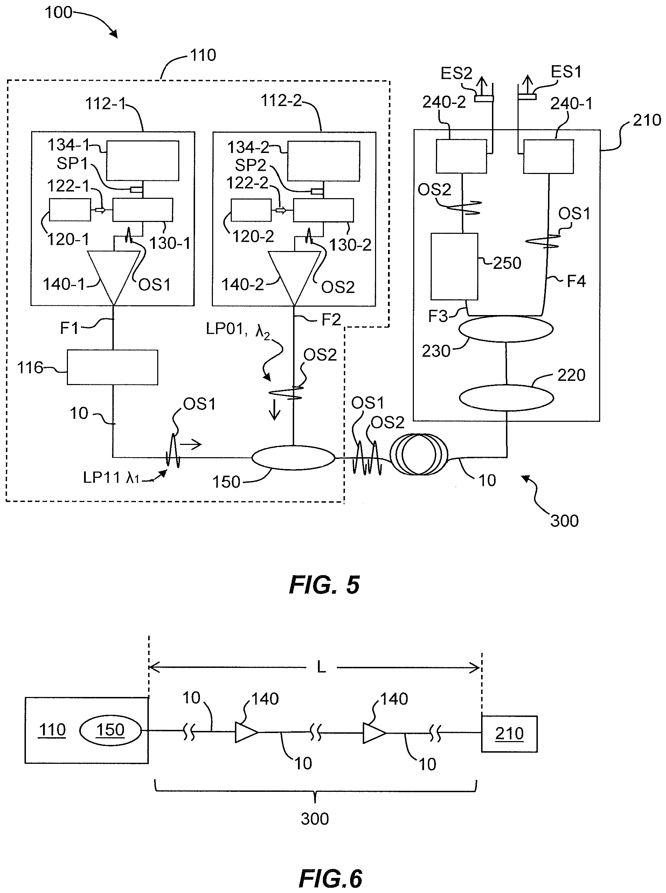

FIG. 5 is a schematic diagram of an example MDM optical transmission system ("MDM system") 100. MDM system 100 includes a transmitter 110 and a receiver 210 optically connected by an optical fiber link 300 that includes at least one span of fiber 10.

Transmitter 110 includes two or more light sources 112 that emit light at the same or different wavelengths. Two light sources 112-1 and 112-2 are shown by way of illustration. Each light source 112 includes at least one laser 120 that emits light 122 having a wavelength between 1500 nm and 1600 nm. In an example, transmitter 110 includes at least 16 lasers transmitting at one or more wavelengths between 1500 and 1600 nm. In another example, transmitter 110 comprises at least 32 lasers transmitting at one or more wavelengths between 1500 and 1600 nm. In another example, transmitter 110 comprises at least 64 lasers transmitting at one or more wavelengths between 1500 and 1600 nm.

Transmitter 110 also includes a LP01-to-LP11 mode converter 116 optically connected to light source 112-1 by a fiber section F1 (e.g., a single-mode fiber section). LP01-to-LP11 mode converter 116 is configured to convert guided light traveling in the LP01 to travel in the LP11 mode. Generally, at least one of light sources 112 in transmitter 110 is optically coupled to an LP01-LP11 mode converter 116, which in an example converts at least 50% of the intensity in the LP01 mode into the LP11 mode.

Laser 120 in each light source unit 112 is optically connected to a corresponding modulator 130, which is driven by a corresponding pulse pattern generator 134 via a corresponding pulse signal SP. In an example, each modulator 130 operates at a speed of 40 Gb/s or higher. In another example, each modulator 130 operates at a speed of 100 Gb/s or higher.

In an example, each modulator 130 may be optically connected to a corresponding optical amplifier 140 such as an erbium-doped fiber amplifier (EDFA). Optical amplifier 140-1 is optically connected to LP01-to-LP11 mode converter 116, which in turn is optically connected to a multiplexer 15 via section of fiber 10. Optical amplifier 140-2 is also optically connected to wavelength multiplexer 150 via fiber section F2.

Wavelength multiplexer 150 is optically connected to transmitter 210 via fiber 10 of optical fiber link 300. Transmitter 210 includes a wavelength demultiplexer 220 optically connected to the transmitter end of fiber 10. Wavelength demultiplexer 220 is in turn optically connected to a splitter 230 that is connected to detectors 240-1 and 240-2 via respective optical fiber sections F3 and F4. A mode filter 250 is disposed in fiber section F3 to filter out either the LP01 or the LP11 mode.

In the operation of MDM system 10, each light source 120 emits light 122, which is then modulated by the corresponding modulator 130 according to the corresponding pulse signal SP from the corresponding pulse pattern generator 134. The output of modulators 130-1 and 130-2 are respective guide-wave optical signals OS1 and OS2 having respective wavelengths $\lambda_1$ and $\lambda_2$ and that propagate in the LP01 mode in respective fiber sections F1 and F2. Optical signal OS1 passes through LP01-to-LP11 mode converter 116, which converts light traveling in the LP01 mode to the LP11 mode so that optical signal OS1 propagates in the LP11 mode.

The LP11 and LP01 modes respectively associated with optical signals OS1 and OS2 are multiplexed by wavelength multiplexer 150 and then travel in fiber 10 of fiber link 300 in their respective modes. The example MDM system 10 of FIG. 5 illustrates an example where the LP01 and LP11 modes are multiplexed by after mode converter 116. However, in other examples there can be an additional wavelength multiplexer that combines optical signals at different wavelengths before sending them through the LP01-LP11 mode converter.

FIG. 6 is a schematic diagram of an example fiber link 300 that includes multiple spans of fiber 10 that are optically coupled to each other via one or more optical amplifiers 140. Fiber link 300 has a length of L km. In an example, L is greater than 100 km, in another example, L is greater that 500 km, in another example L is greater than 1000 km and in another example, L is greater than 2000 km. In an example, there are at least two spans of fiber 10, in another example, there are at least five spans of fiber 10, in another example, there are at least ten spans of fiber and in another example, there are at least ten spans of fiber 10. In examples where fiber link 300 includes a single span of fiber 10, the length L in one example is greater than 20 km, in another example, is greater than 40 km, and in another example is greater than 60 km.

Optical signals OS1 and OS2 enter receiver 210 and are demultiplexed by wavelength demultiplexer 220. The demultiplexed signals OS1 and OS2 are then sent through splitter 230, which diverts approximately half of the signal intensity to first detector 240-1. The remaining intensity in the signal is sent through mode filter 250 in fiber section F3, and the mode filter in this example filters out the LP01 mode. In another example, mode filter 250 filters out the LP11 mode. Detectors 240-1 and 240-2 thus detect optical signals OS1 and OS2 and convert these signals into corresponding electrical signals ES1 and ES2 that can be processed downstream by processing electronics (not shown).

**Claims**

1. A few mode optical fiber (10), comprising:

a glass core (20) having a radius $R_1$, a graded refractive index profile with an alpha value greater than or equal to 2.3 and less than 2.7 at the wavelength of 1550 nm, the maximum relative refractive index $\Delta_{1MAX}$ in the range from 0.3% to 0.6% relative to the refractive index, $n_{REF}$ of the glass cladding, and an effective area at the wavelength of 1550 nm greater than 90 $\mu m^2$ and less than 160 $\mu m^2$;

the glass cladding immediately surrounding the glass core, wherein $\Delta_{1MAX} > \Delta_{4MAX}$; and

**characterised in that** the radius R1 is in the range from 8 $\mu m$ to 14 $\mu m$, the glass core and glass cladding support the propagation and transmission of only LP01 modes and LP11 modes at one or more wavelengths greater than 1500 nm, with a group delay magnitude between the LP01 and LP11 modes that is less than 0.5 ns/km at the wavelength of 1550 nm.

2. The few mode optical fiber (10) of claim 1, wherein the glass cladding comprises:

(i) a low-index ring (40) that immediately surrounds the glass core and that has a minimum relative refractive index $\Delta_{2MIN} < \Delta_{1MAX}$; or

(ii) a low-index ring (40) surrounding the core (20) and having a relative refractive index $\Delta_{2MIN} \Delta_{1MAX}$, with an annular inner cladding disposed in between the core and the low-index ring.

3. The few mode optical fiber (10) of claim 1, further having a group delay magnitude between the LP01 modes and the LP11 modes that is less than 0.3 ns/km at the wavelength of 1550 nm

4. The few mode optical fiber (10) of claim 1, further having:

a cutoff wavelength for an LP02 mode that is less than 1800 nm; and
a cutoff wavelength for the LP11 modes that is greater than 2400 nm.

5. The few mode optical fiber (10) of claim 2, wherein the low-index ring (40) has a radial thickness in the range from 2 $\mu m$ to 15 $\mu m$.

6. The few mode optical fiber of claim 2, wherein the inner cladding has a radial thickness less than or equal to 5 $\mu m$.

7. A few mode optical fiber (10), comprising:

a glass core (20) comprising a radius $R_1$, a graded refractive index profile with an alpha value greater than or equal to 1.9 and less than 2.7 at the wavelength of 1550 nm, a maximum relative refractive index $\Delta_{1MAX}$ from 0.3% to 0.6% relative to the maximum refractive index, $\Delta_{4MAX}$, of a glass cladding, and an effective area at the wavelength of 1550 nm greater than 90 $\mu m^2$ and less than 160 $\mu m^2$;

the glass cladding comprising a low-index ring (40) that surrounds the glass core and having with a minimum relative refractive index $\Delta_{2MIN} < 0$, and an outer cladding layer (50) surrounding the low-index ring and having a maximum relative refractive index $\Delta_{4MAX}$ such that $\Delta_{1MAX} > \Delta_{4MAX} > \Delta_{2MIN}$; and

**characterised in that** the radius R1 is in the range from 8 $\mu m$ to 14 $\mu m$ and the glass core and glass cladding support the propagation and transmission of only LP01 modes and LP11 modes at one or more wavelengths greater than 1500 nm.

8. The few mode optical fiber (10) of claim 7, further comprising an inner cladding (30) disposed immediately adjacent and surrounding the core (20), the inner cladding having a relative refractive index $\Delta_3$ wherein $\Delta_{2MIN} < \Delta_3 \leq \Delta_{4MAX}$.

9. The few mode optical fiber (10) of claim 7, further having

(i) a group delay magnitude between the LP01 modes and the LP11 modes that is less than 0.5 ns/km at the wavelength of 1550 nm; and/or

(ii) a cutoff wavelength for an LP02 mode that is less than 1600 nm; and a cutoff wavelength for the LP11 modes that is greater than 2000 nm.

10. The few mode optical fiber of claim 7, wherein the glass cladding (50) is spaced apart from the core by an inner cladding (30), and the inner cladding (30) has a radial thickness less than or equal to 5 $\mu m$.

11. The few mode optical fiber of claim 7, wherein the glass cladding (50) is spaced apart from the core (20) by an inner cladding (30) wherein the inner cladding has a relative refractive index $\Delta_3 \leq \Delta_{4MAX}$.

**12.** A mode division multiplexing (MDM) optical transmission system, comprising:

a transmitter configured to transmit first and second guided-wave optical signals respectively having a first and a second wavelength, respectively, in an LP11 mode and an LP01 mode, respectively;
a receiver configured to receive and wavelength demultiplex the first and second optical signals; and
the few mode optical fiber (10) of claim 1 or 7 configured to optically connect the transmitter and the receiver and support the transmission of the first and second guided-wave optical signals from the transmitter to the receiver.

**Patentansprüche**

**1.** Mehrmodale optische Faser (10), umfassend:

einen Glaskern (20) mit einem Radius $R_1$, einem abgestuften Brechungsindexprofil mit einem Alphawert, der größer oder gleich 2,3 und kleiner als 2,7 bei einer Wellenlänge von 1550 nm ist, wobei der maximale relative Brechungsindex $\Delta_{1MAX}$ im Bereich von 0,3 % bis 0,6 % relativ zum Brechungsindex, $n_{REF}$, der Glasumhüllung ist und eine effektive Fläche bei der Wellenlänge von 1550 nm größer als 90 $\mu m^2$ und kleiner als 160 $\mu m^2$ ist; die Glasumhüllung den Glaskern unmittelbar umgibt, wobei $\Delta_{1MAX} > \Delta_{4MAX}$; und **dadurch gekennzeichnet, dass** der Radius R1 im Bereich von 8 $\mu m$ bis 14 $\mu m$ ist, der Glaskern und die Glasumhüllung die Verbreitung und Übertragung von nur LP01 Moden und LP11 Moden bei einer oder mehreren Wellenlängen unterstützen, die größer als 1500 nm sind, wobei eine Gruppenverzögerungsgröße zwischen den LP01 und LP11 Moden kleiner als 0,5 ns/km bei der Wellenlänge von 1550 nm ist.

**2.** Mehrmodale optische Faser (10) nach Anspruch 1, wobei die Glasumhüllung umfasst:

(i) einen Niedrigindexring (40), der den Glaskern unmittelbar umgibt und einen minimalen relativen Brechungs-index $\Delta_{2MIN} < \Delta_{1MAX}$ aufweist; oder
(ii) einen Niedrigindexring (40), der den Kern (20) umgibt und einen relativen Brechungsindex $\Delta_{2MIN} < \Delta_{1MAX}$ aufweist, wobei eine ringförmige Innenumhüllung zwischen dem Kern und dem Niederindexring angeordnet ist.

**3.** Mehrmodale optische Faser (10) nach Anspruch 1, die ferner eine Gruppenverzögerungsgröße zwischen den LP01 Moden und den LP11 Moden aufweist, die kleiner als 0,3 ns/km bei der Wellenlänge von 1500 nm ist.

**4.** Mehrmodale optische Faser (10) nach Anspruch 1, ferner aufweisend:

eine Grenzwellenlänge für einen LP02 Modus, die kleiner als 1800 nm ist; und
eine Grenzwellenlänge für die LP11 Moden, die größer als 2400 nm ist.

**5.** Mehrmodale optische Faser (10) nach Anspruch 2, wobei der Niederindexring (40) eine radiale Dicke im Bereich von 2 $\mu m$ bis 15 $\mu m$ aufweist.

**6.** Mehrmodale optische Faser nach Anspruch 2, wobei die Innenumhüllung eine radiale Dicke von kleiner oder gleich 5 $\mu m$ aufweist.

**7.** Mehrmodale optische Faser (10), umfassend:

einen Glaskern (20), umfassend einen Radius $R_1$, ein abgestuftes Brechungsindexprofil mit einem Alphawert größer oder gleich 1,9 und kleiner als 2,7 bei der Wellenlänge von 1550 nm, einen maximalen relativen Bre-chungsindex $\Delta_{1MAX}$ von 0,3 % bis 0,6 % relativ zum maximalen Brechungsindex, $\Delta_{4MAX}$, einer Glasumhüllung, und eine effektive Fläche bei der Wellenlänge von 1550 nm größer als 90 $\mu m^2$ und kleiner als 160 $\mu m^2$;
wobei die Glasumhüllung einen Niedrigbrechungsring (40), der den Glaskern umgibt und einen minimalen relativen Brechungsindex $\Delta_{2MIN} < 0$ aufweist, und eine Außenumhüllungsschicht (50), die den Niedrigindexring umgibt und einen maximalen relativen Brechungsindex $\Delta_{4MAX}$ aufweist, umfasst, so dass $\Delta_{1MAX} > \Delta_{4MAX} > \Delta_{2MIN}$; und
**dadurch gekennzeichnet, dass** der Radius R1 im Bereich von 8 $\mu m$ bis 14 $\mu m$ ist und der Glaskern und die Glasumhüllung die Verbreitung und Übertragung nur von LP01 Moden und LP11 Moden bei einer oder mehreren Wellenlängen größer als 1500 nm unterstützen.

8.  Mehrmodale optische Faser (10) nach Anspruch 7, ferner umfassend eine Innenumhüllung (30), die unmittelbar benachbart zum Kern (20) angeordnet ist und diesen umgibt, wobei die Innenumhüllung einen relativen Brechungsindex $\Delta_3$ aufweist, wobei $\Delta_{2MIN} < \Delta_3 \le \Delta_{4MAX}$.

9.  Mehrmodale optische Faser (10) nach Anspruch 7, ferner aufweisend:

    (i) eine Gruppenverzögerungsgröße zwischen den LP01 Moden und den LP 11 Moden, die kleiner als 0,5 ns/km bei der Wellenlänge von 1500 nm ist; und/oder
    (ii) eine Grenzwellenlänge für einen LP02 Modus, die kleiner als 1600 nm ist; und eine Grenzwellenlänge für die LP11 Moden, die größer als 2000 nm ist.

10. Mehrmodale optische Faser nach Anspruch 7, wobei die Glasumhüllung (50) durch eine Innenumhüllung (30) vom Kern beabstandet ist, und die Innenumhüllung (30) eine radiale Dicke von kleiner oder gleich 5 $\mu$m aufweist.

11. Mehrmodale optische Faser nach Anspruch 7, wobei die Glasumhüllung (50) durch eine Innenumhüllung (30) vom Kern (20) beabstandet ist, wobei die Innenumhüllung einen relativen Brechungsindex $\Delta_3 \le \Delta_{4MAX}$ aufweist.

12. Optisches MDM-(Mode Division Multiplexing)-Übertragungssystem, umfassend:

    einen Sender, der konfiguriert ist, um jeweils erste und zweite optische Signale mit geführten Wellen, die jeweils eine erste bzw. zweite Wellenlänge aufweisen, in einem LP11 Modus bzw. einem LP01 Modus zu senden;
    einen Empfänger, der konfiguriert ist, um die ersten und zweiten optischen Signale zu empfangen und ihre Wellenlänge zu demultiplexen; und
    mehrmodale optische Faser (10) nach Anspruch 1 oder 7, konfiguriert, um den Sender und den Empfänger optisch zu verbinden und die Übertragung der ersten und zweiten Signale mit geführter Wellenlänge vom Sender an den Empfänger zu unterstützen.

**Revendications**

1.  Fibre optique à nombre de modes restreint (10), comprenant :

    un noyau de verre (20) possédant un rayon R1, un profil d'indice de réfraction progressif avec valeur alpha supérieure ou égale à 2,3 et inférieure à 2,7 à 1 550 nm de longueur d'onde, l'indice de réfraction relatif maximum $\Delta_{1MAX}$ dans la plage comprise entre 0,3% et 0,6% relativement à l'indice de réfraction $n_{REF}$ du gainage de verre, et une surface utile à 1 550 nm de longueur d'onde supérieure à 90 $\mu$m$^2$ et inférieure à 160 $\mu$m$^2$;
    le gainage de verre entourant immédiatement le noyau de verre, où $\Delta_{1MAX} > \Delta_{4MAX}$ ; et
    **caractérisée en ce que** le rayon R1 est compris dans la plage 8 $\mu$m à 14 $\mu$m, le noyau de verre et le gainage de verre supportant la propagation et la transmission de modes LP01 et de modes LP11 seulement à une ou plusieurs longueurs d'onde supérieures à 1 500 nm, avec une magnitude de retard de groupe, entre les modes LP01 et LP11, inférieure à 0,5 ns/km à la longueur d'onde de 1 550 nm.

2.  Fibre optique à nombre de modes restreint (10) selon la revendication 1, le gainage de verre comprenant :

    (i) un anneau à faible indice (40) entourant immédiatement le gainage de verre, et possédant un indice de réfraction relatif minimum $\Delta_{2MIN} < \Delta_{1MAX}$ ; ou
    (ii) un anneau à faible indice (40) entourant le noyau (20) et possédant un indice de réfraction relatif $\Delta_{2MIN} < \Delta_{1MAX}$, avec un gainage interne annulaire disposé entre le noyau et l'anneau à faible indice.

3.  Fibre optique à nombre de modes restreint (10) selon la revendication 1, comprenant en outre une magnitude de retard de groupe, entre les modes LP01 et les modes LP11, inférieure à 0,3 ns/km à la longueur d'onde de 1 550 nm.

4.  Fibre optique à nombre de modes restreint (10) selon la revendication 1, comprenant en outre :

    une longueur d'onde de coupure pour un mode LP02 inférieur à 1 800 nm ; et
    une longueur d'onde de coupure pour les modes LP11 supérieure à 2 400 nm.

5.  Fibre optique à nombre de modes restreint (10) selon la revendication 2, l'épaisseur radiale de l'anneau à faible indice (40) étant comprise dans la plage 2 $\mu$m à 15 $\mu$m.

6. Fibre optique à nombre de modes restreint selon la revendication 2, l'épaisseur radiale du gainage interne étant inférieure ou égale à 5 $\mu$m.

7. Fibre optique à nombre de modes restreint (10), comprenant : un noyau de verre (20) possédant un rayon R1, un profil d'indice de réfraction progressif avec valeur alpha supérieure ou égale à 1,9 et inférieure à 2,7 à 1 550 nm de longueur d'onde, un indice de réfraction relatif maximum $\Delta_{1MAX}$ compris entre 0,3% et 0,6% relativement à l'indice de réfraction maximum, $\Delta_{4MAX}$, d'un gainage de verre, et une surface utile à 1 550 nm de longueur d'onde supérieure à 90 $\mu$m$^2$ et inférieure à 160 $\mu$m$^2$;
le gainage de verre comprenant un anneau à faible indice (40) entourant le noyau de verre, et possédant un indice de réfraction relatif minimum $\Delta_{2MIN}$ < 0, et un gainage de verre externe (50) entourant l'anneau à faible indice, et possédant un indice de réfraction relatif maximum $\Delta_{4MAX}$ de sorte que $\Delta_{1MAX} > \Delta_{4MAX} > \Delta_{2MIN}$ ; et
**caractérisée en ce que** le rayon R1 est compris dans la plage 8 $\mu$m à 14 $\mu$m, et le noyau de verre et le gainage de verre supportent la propagation et la transmission de modes LP01 et de modes LP11 seulement à une ou plusieurs longueurs d'onde supérieures à 1 500 nm.

8. Fibre optique à nombre de modes restreint (10) selon la revendication 7, comprenant en outre un gainage interne (30) immédiatement adjacent au noyau (20), et l'entourant, le gainage interne possédant un indice de réfraction relatif $\Delta_3$ tel que $\Delta_{2MIN} < \Delta_3 \le \Delta_{4MAX}$.

9. Fibre optique à nombre de modes restreint (10) selon la revendication 7, comprenant en outre :

(i) une magnitude de retard de groupe entre les modes LP01 et les modes LP11 inférieure à 0,5 ns/km à la longueur d'onde de 1 550 nm ; et/ou
(ii) une longueur d'onde de coupure pour un mode LP02 inférieure à 1 600 nm ; et

une longueur d'onde de coupure pour des modes LP11 supérieure à 2 000 nm.

10. Fibre optique à nombre de modes restreint selon la revendication 7, le gainage de verre (50) étant espacé du noyau par un gainage interne (30), et l'épaisseur radiale du gainage interne (30) étant inférieure ou égale à 5 $\mu$m.

11. Fibre optique à nombre de modes restreint selon la revendication 7, le gainage de verre (50) étant espacé du noyau (20) par un gainage interne (30), l'indice de réfraction relatif du gainage interne étant $\Delta_3 \le \Delta_{4MAX}$.

12. Système de transmission optique à multiplexage en mode (MDM), comprenant :

un émetteur configuré pour transmettre des premier et deuxième signaux optiques à ondes guidées respectivement, possédant une première et une deuxième longueur d'onde respectivement, dans un mode LP11 et un mode LP01 respectivement ;
un récepteur configuré pour recevoir et dé-multiplexer des longueurs d'onde des premier et deuxième signaux optiques ; et
la fibre optique à nombre de modes restreint (10) selon la revendication 1 ou 7, configurée pour connecter optiquement l'émetteur et le récepteur, et supporter la transmission des premier et deuxième signaux optiques à ondes guidées de l'émetteur au récepteur.

10

A

A

*FIG. 1*

10

20

$R_O$

50

$R_1$

*FIG. 2A*

**FIG. 2B**

**FIG. 3A**

**FIG. 3B**

**FIG. 4A**

**FIG. 4B**

**FIG. 4C**

**FIG. 4D**

**FIG. 5**

**FIG.6**

**FIG. 7**

**EP 2 745 151 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005111683 A

- US 20020164140 A

### Non-patent literature cited in the description

- Single Mode Fiber Optics. Jeunhomme. Marcel Dekker, 1990, 39-44

- **T.A. LENAHAN.** Calculation of modes in an optical fiber using a finite element method and EISPACK. *Bell Syst. Tech. J.,* February 1983, vol. 62 (1), 2663